# EUROPEAN PATENT APPLICATION

(11) **EP 4 576 481 A1**
(43) Date of publication of application: **25.06.2025**
(21) Application number: 23315488.9
(22) Date of filing: 22.12.2023
(51) Int. Cl.: H02J 3/28, H02J 3/38, H02J 15/00

(54) **ENERGY MANAGEMENT SYSTEM AND METHOD**

(71) Applicant: H2X Ecosystems, 35170 Bruz (FR)
(72) Inventor: Paul, Stéphane, 29200 BREST (FR); Fleureau, Jean-Luc, 29460 DAOULAS (FR)
(74) Representative: Yes My Patent

(57) **Abstract**

The invention concerns a system (1) for managing a smart energy grid (10) on a territory (30), wherein the system (1) comprises: the smart energy grid (10); and a data processing system (20); wherein the smart energy grid (10) comprises several hydrogen devices (12), including at least: a hydrogen storage device (14), and a hydrogen consumption device (15); wherein each hydrogen device (12) has device parameters arranged in four categories: material inputs, energy source inputs, internal data inputs, and outputs. The data processing system (20) is configured for monitoring the device parameters; and for implementing a decision step, acting on the smart energy grid (10), based on decision parameters including the device parameters. The invention also concerns a method for managing a smart energy grid (10) on a territory (30).

## Description

### TECHNICAL FIELD OF THE INVENTION

The invention concerns a system and a method for managing a smart energy grid on a territory.

### BACKGROUND OF THE INVENTION

Nowadays, hydrogen technologies are implemented in buildings, factories, and vehicles, for various uses. Hydrogen devices include production devices, storage devices, and consumption devices. Hydrogen devices can be distributed in a smart energy grid, for example, a microgrid equipping an industrial site. However, the existing systems for managing the energy grid are not fully satisfactory.

### SUMMARY OF THE INVENTION

The aim of the invention is to provide an improved energy management system.

To this end, the invention concerns a system for managing a smart energy grid on a territory, wherein the system comprises:
- the smart energy grid, and
- a data processing system;
wherein the smart energy grid comprises several hydrogen devices, including at least:
- a hydrogen storage device, and
- a hydrogen consumption device;
wherein each hydrogen device has device parameters arranged in four categories:
- material inputs,
- energy source inputs,
- internal data inputs, and
- outputs;
wherein the data processing system (20) is configured:
- for monitoring the device parameters (DP); and
- for implementing a decision step, acting on the smart energy grid (10), based on decision parameters (D20) including the device parameters (DP).

Thanks to the invention, the smart energy grid can be managed precisely and efficiently. Several relevant device parameters are considered, thus improving energy management.

According to further aspects of the invention which are advantageous but not compulsory, such a system may incorporate one or several of the following features:
- The smart energy grid is a micro-grid, with a capacity comprised between 1 kW to 100 MW.
- The grid is connected to the main electrical network.
- The grid is independent from the main electrical network.
- The data processing system is configured for performing decision steps continuously.
- The data processing system is configured for monitoring the device parameters in real-time.
- The data processing system is configured for performing decision steps in real-time.
- The data processing system runs permanently.
- Preferably, the decision steps are performed solely by the data processing system, without human intervention.
- A human operator can intervene in the data processing system, the softwares, and/or the decision parameters.
- The decision step is based on decision parameters arranged in two categories: internal parameters related to the smart energy grid, including the device parameters, and external parameters independent from the smart energy grid.
- The internal parameters are related to the smart energy grid and its components.
- The external parameters are independent of the smart energy grid. They can be related to other territories, equipped with their own grids.
- The territory is an industrial site, and the smart energy grid is a micro-grid equipping this industrial site.
- The territory is a city, and the smart energy grid is a grid equipping this city.
- The territory is a group of municipalities, and the smart energy grid is a grid equipping these municipalities.
- The data processing system is configured for implementing a decision step consisting of optimizing the operation of at least some of the hydrogen devices.
- The data processing system is configured for implementing a decision step consisting of deciding whether to use a hydrogen device or not.
- The data processing system comprises a sensor network, which is connected to the hydrogen devices, and which provides the internal data inputs and the outputs of the hydrogen devices to the data processing system.
- The hydrogen devices also comprise at least one hydrogen production device, for example an electrolyzer, a vaporeforming device, or a pyrolysis device.
- The hydrogen production device has device parameters as follows: material inputs including at least one among water, biomass, and waste, such as plastic, wastewater sludge, wood; energy source inputs including at least a decarbonation parameter of a low carbon energy network, such as a renewable energy network (solar plant, wind turbine, etc.); internal data inputs including at least one among availability, startup time, lifetime, storage level, investment, maintenance, surface, yield; and outputs including dihydrogen, dioxygen, carbon dioxide, and heat, according to the hydrogen production method.
- The hydrogen storage device is a cartridge movable between a hydrogen production device and the hydrogen consumption device.
- The hydrogen storage device is a cartridge integrated into the hydrogen consumption device, such as a vehicle.
- The hydrogen storage device is a tank movable between a hydrogen production device and the hydrogen consumption device, for example, movable on a truck.
- The hydrogen storage device is a tank integrated into a hydrogen production device. This tank is used for temporary storage and distribution.
- The hydrogen storage device is a tank integrated into the hydrogen consumption device. This tank can be filled thanks to a pipeline or a movable hydrogen storage device,
- The hydrogen storage device has internal data inputs including position, pressure, temperature, and storage level.
- The hydrogen consumption device is equipped with different energy sources, such as a hydrogen fuel cell, a battery pack and/or an internal combustion engine, and wherein the data processing system is configured for implementing a decision step consisting of deciding to use one of the energy sources rather than the other.
- The hydrogen consumption device is an automotive vehicle and is provided with internal data inputs including position, day of the week, and driving habits of the current driver.
- The hydrogen consumption device has device parameters as follows: material inputs including dihydrogen; energy source inputs including at least a decarbonation parameter of a low carbon energy network, such as a renewable energy network (solar plant, wind turbine, etc.); internal data inputs including at least one among position, availability, startup time, lifetime, pressure, temperature, storage level, investment, maintenance, surface, yield; and outputs including power and heat.
- The data processing system comprises: a database including a set of data about the smart energy grid and the territory; a software suite connected to the database and configured for managing the smart energy grid, based on the set of data; the sensor network connected to the database and to the hydrogen devices, sending the internal data inputs and the outputs of the hydrogen devices to the database; wherein the set of data includes the device parameters arranged in four categories: the material inputs, the energy source inputs, the internal data inputs, and the outputs.
- The smart energy grid also comprises an electrical device, for example, a wind turbine, a wind farm, a solar farm, an electric dam, or a renewable marine energy plant.
- Alternately, the electrical device can be an electrical network, if the electrical devices that produce renewable energy cannot respond to energy demand.
- The electrical device is selectively used to power: a hydrogen production device, and/or an installation, such as a factory, a harbor, or a construction site; and wherein: if the electrical device produces less energy than needed for the installation, then the installation is additionally powered by another energy source; if the electrical device produces more energy than needed for the installation, then the electrical device is also used to power the hydrogen production device; and in specific cases, the electrical device is used to power only the hydrogen production device, while the installation is powered by another energy source.
- The electrical device is selectively used to: power a hydrogen production device, and/or charge an electricity storage device, such as a battery.
- The device parameters include present conditions, such as position, availability, lifetime, energy consumption, carbon footprint, capability of using solar radiation, etc.
- The device parameters include forecast conditions, such as availability, energy consumption, maintenance planning, etc.
- The external parameters include present conditions, such as solar radiation, comparison of cost between different energy sources, legal regulations, season, day of the week, etc.
- The external parameters include forecast conditions, such as weather forecast, solar radiation forecast, forecast electricity cost of the main grid, comparison of forecast costs between different energy sources, coming legal regulations, etc.
- The system comprises at least two hydrogen consumption devices, including a first device and a second device, and wherein the data processing system is configured for implementing a decision step consisting of deciding to use either the first device or the second device, based on the decision parameters arranged in two categories: the device parameters of the first device and the second device, and the external parameters.
- The system comprises at least two sub-systems, each sub-system covering a sub-territory of the territory, and wherein the data processing system is configured for implementing a decision step performable either independently for each sub-system or collectively for the sub-systems.
- The system is connected to at least another system covering a neighboring territory. The data processing system is configured for implementing a decision step performable either independently for each energetic system or collectively for the energetic systems.

The invention also concerns a method for managing a smart energy grid on a territory, by implementing the system as described here-above. The data processing system monitors the device parameters, and implements a decision step, acting on the smart energy grid, based on decision parameters including the device parameters.

### BRIEF DESCRIPTION OF THE DRAWINGS

The *invention will now be explained in correspondence with the annexed figures, and as an illustrative example, without restricting the object of the invention. In the annexed figures:
- figure 1 is a schematic view of a simple hydrogen energy system;
- figure 2 is a schematic view of an energy management system according to the invention;
- figure 3 is a schematic view of an energy management system according to the invention, showing the example of a micro-grid;
- figure 4 is a flowchart for a hydrogen production device;
- figure 5 is a flowchart for a hydrogen consumption device;
- figure 6 is a flowchart showing a decision step, based on present conditions and forecast conditions;
- figure 7 is a schematic view of some elements of the system;
- figure 8 shows a screen of a software related to the system;
- figure 9 shows another screen of a software related to the system;
- figure 10 is map of a territory equipped with the system according to the invention.

### DETAILED DESCRIPTION OF SOME EMBODIMENTS

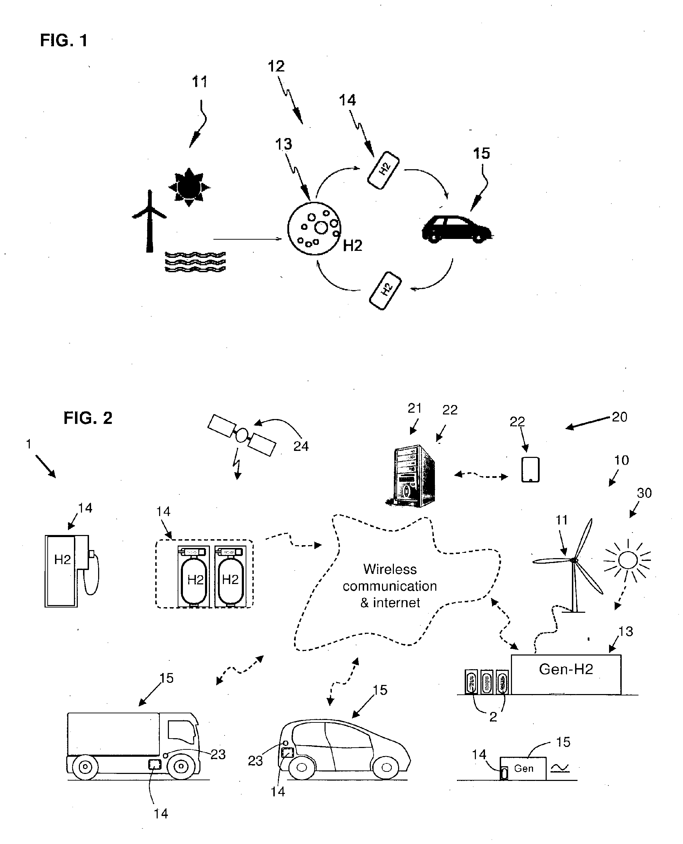

Figure 1 shows a simple hydrogen energy system, comprising an electric device (11) and hydrogen devices (12), including a hydrogen production device (13), a hydrogen storage device (14), and a hydrogen consumption device (15) configured as a vehicle.

Figure 2 shows an energy management system (1) according to the invention. The system (1) is designed for managing a smart energy grid (10) on a territory (30). The system (1) comprises the smart energy grid (10) and a data processing system (20).

The smart energy grid (10) comprises several hydrogen devices (12), including a hydrogen production device (13), hydrogen storage devices (14) and hydrogen consumption devices (15). The grid further comprises an electrical device (11). The grid (10) can be connected to the main electrical network or be independent from the main electrical network.

The data processing system (20) comprises a database (21), a software suite (22) connected to the database (21) and configured for managing the smart energy grid (10), a sensor network (23) connected to the database (21) and to the hydrogen devices (12), and a satellite (24).

Each hydrogen device (12) has device parameters (DP) arranged in four categories: material inputs, energy source inputs, internal data inputs, and outputs.

The data processing system (20) is configured for monitoring the device parameters (DP); and for implementing a decision step, acting on the smart energy grid (10), based on decision parameters (D20) including the device parameters (DP).

The data processing system (20) is configured for monitoring the device parameters (DP) in real time. The data processing system (20) is configured for performing decision steps continuously, in real time.

Preferably, the decision steps are performed solely by the data processing system (20), without human intervention.

A human operator can intervene on the data processing system (20), the softwares, and the decision parameters (D20).

The electrical device (11) can be a wind turbine, a wind plant, a solar farm, an electric dam, or a renewable marine energy plant.

Alternately, the electrical device (11) can be an electrical network, if the electrical devices that produce renewable energy cannot respond to energy demand.

The hydrogen production device (13) can be an electrolyzer, a vaporeforming device or a pyrolysis device.

On a territory (30), several hydrogen production devices (13) can be disposed in different places according to the raw materials available locally. The diversity of resources makes it possible to multiply the choices of hydrogen production methods.

The hydrogen storage device (14) can be:
- a cartridge movable between a hydrogen production device (13) and a hydrogen consumption device (15).
- a cartridge integrated into the hydrogen consumption device (15), such as a vehicle.
- a tank movable between a hydrogen production device (13) and the hydrogen consumption device (15), for example, movable on a truck.
- a tank integrated into a hydrogen production device (13). This tank is used for temporary storage and distribution.
- a tank integrated into the hydrogen consumption device (15). This tank can be filled thanks to a pipeline or a movable hydrogen storage device (14).

A tank has a bigger capacity than a cartridge.

The hydrogen consumption device (15) can be an electric generator integrating an internal combustion engine or a fuel cell. The generator can be designed to equip a vehicle, a factory, or a building.

The generator can be used for the electric charge of automotive vehicles or other vehicles, such as bikes, scooters, buses, trucks, and boats.

Alternatively, the generator can equip industrial sites, construction sites, factories, and buildings such as hospitals. The generator can be used for clipping of power demand peaks if necessary. The generator can be used as backup for a micro-grid to supplement the electrical network in the event of network failure.

Alternatively, the hydrogen consumption device (15) can be a vehicle.

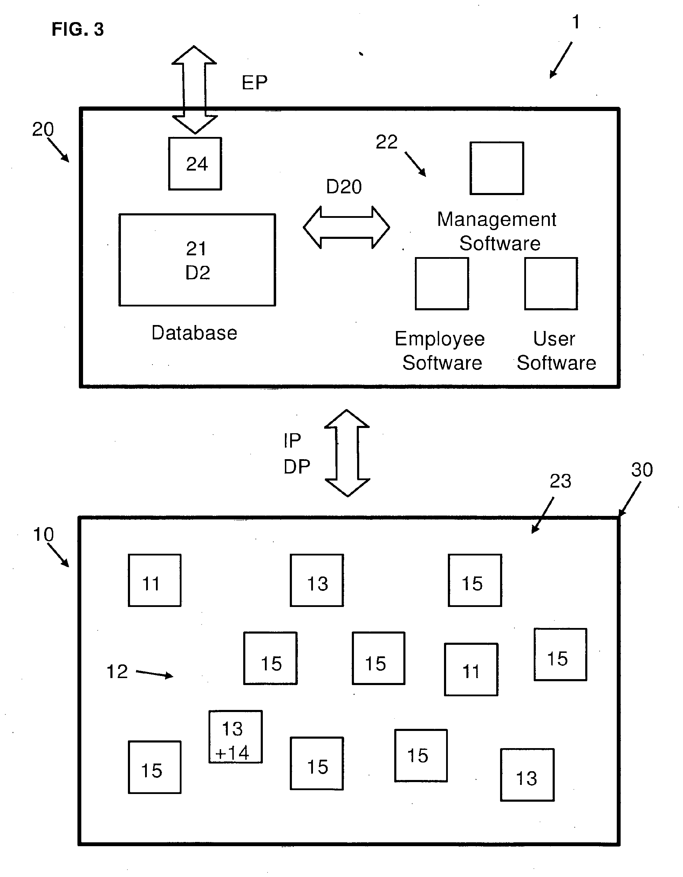

Figure 3 shows another example of a system (1) according to the invention. The decision step is based on decision parameters (D20) arranged in two categories: internal parameters (IP) related to the smart energy grid (10), including the device parameters (DP); and external parameters (EP) independent from the smart energy grid (10).

The internal parameters (IP) are related to the territory (30), the smart energy grid (10), and its components. The grid (10) is a technical response to the particularities of the territory (30).

The external parameters (EP) are independent of the smart energy grid (10) and the territory (30). They can be related to other territories, equipped with their own grids.

According to a specific embodiment, the smart energy grid (10) can be a micro-grid. For example, the capacity of the micro-grid can range from a few kW to several tens of MW, depending on the application.

In a particular embodiment, the territory (30) may be an industrial site, and the smart energy grid (10) is a micro-grid equipping this industrial site.

In another particular embodiment, the territory (30) may be a city, and the smart energy grid (10) is a grid equipping this city.

In another particular embodiment, the territory (30) may be a group of municipalities, and the smart energy grid (10) is a grid equipping these municipalities.

Alternatively, other territories (30) may be defined without departing from the invention.

The data processing system (20) can be configured for implementing different decision steps:
- optimizing operation of at least some of the hydrogen devices (12);
- decide whether to use a specific hydrogen device (12) or not;
- decide to use an energy source rather than another;
- decide to use a first or a second hydrogen device (12) in a specific situation;
- etc.

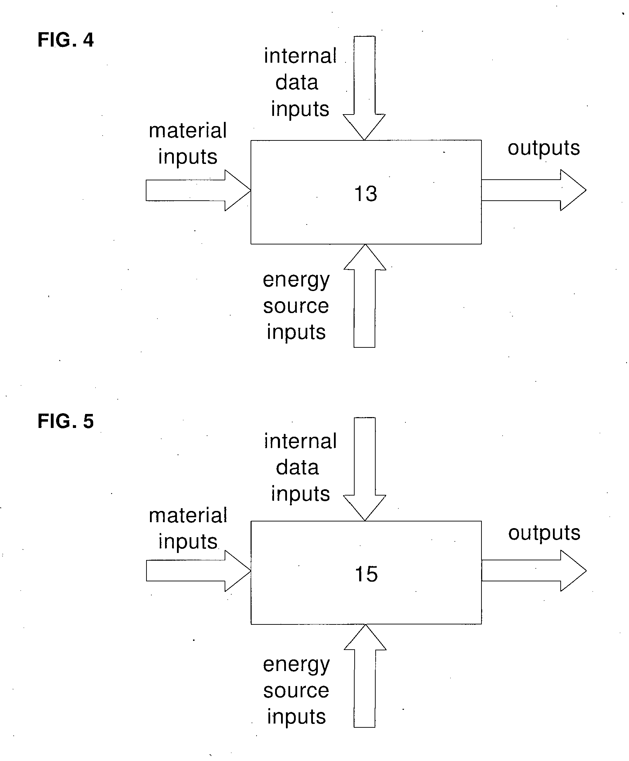

Figure 4 shows the flowchart of a hydrogen production device (13), having device parameters (DP) as follows:
- material inputs including at least one among water, biomass, and waste, such as plastic, wastewater sludge, wood;
- energy source inputs including at least a decarbonation parameter of a low carbon energy network, such as a renewable energy network (solar plant, wind turbine, etc.);
- internal data inputs including at least one among availability, startup time, lifetime, storage level, investment, maintenance, surface, yield; and
- outputs including dihydrogen, dioxygen, carbon dioxide, and heat, according to the hydrogen production method.

Figure 5 shows the flowchart for a hydrogen consumption device (15), having device parameters (DP) as follows:
- material inputs including dihydrogen;
- energy source inputs including at least a decarbonation parameter of a low carbon energy network, such as a renewable energy network (solar plant, wind turbine, etc.);
- internal data inputs including at least one among position, availability, startup time, lifetime, pressure, temperature, storage level, investment, maintenance, surface, yield; and
- outputs including power and heat.

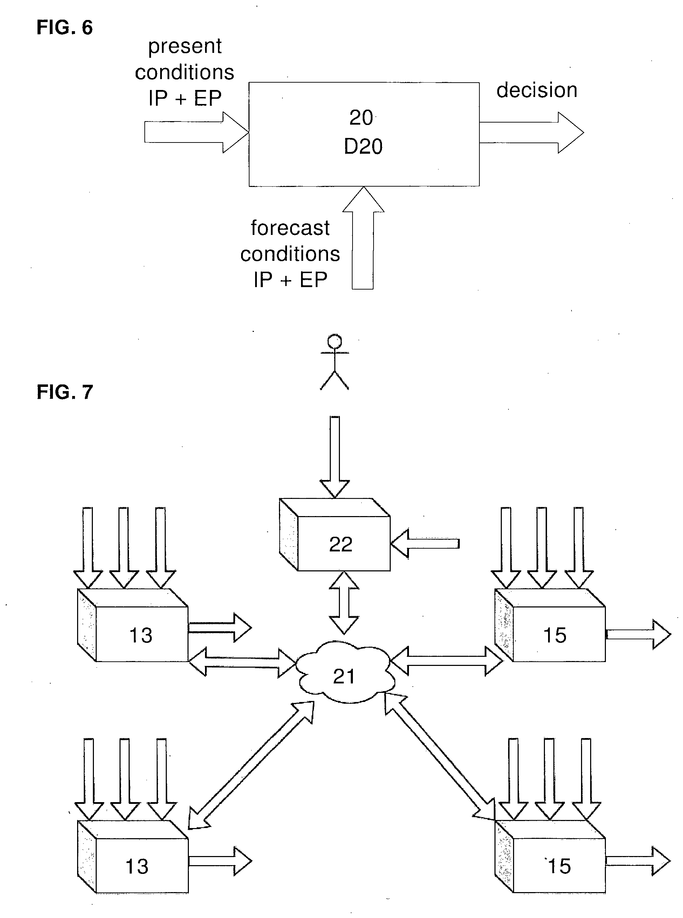

Figure 6 shows the flowchart of a decision step, based on present conditions and forecast conditions.

The decision step is based on decision parameters (D20) arranged in two categories: internal parameters (IP) related to the smart energy grid (10), including the device parameters (DP); and external parameters (EP) independent from the smart energy grid (10).

The internal parameters (IP) can include present conditions, such as technical parameters of the components of the grid (10), comparison of cost between different energy sources equipping the grid (10), parameters of the territory (30) equipped with the grid (10), etc.

The internal parameters (IP) can include forecast conditions, such as availability, energy consumption, or maintenance planning of the components of the grid (10), forecast evolution of the grid (10), forecast evolution of the territory (30), etc.

The device parameters (DP) can include present conditions, such as position, availability, lifetime, energy consumption, carbon footprint, capability of using solar radiation, etc.

The device parameters (DP) can include forecast conditions, such as availability, energy consumption, maintenance planning, etc.

The external parameters (EP) can include present conditions, such as solar radiation, comparison of cost between different energy sources, legal regulations, season, day of the week, etc.

The external parameters (EP) can include forecast conditions, such as weather forecast, solar radiation forecast, forecast electricity cost of the main grid, comparison of forecast costs between different energy sources, coming legal regulations, etc.

Figure 7 is a schematic view of some elements of the system (1): the database (21) located in the cloud, the software suite (22), two hydrogen production devices (13), and two hydrogen consumption devices (15).

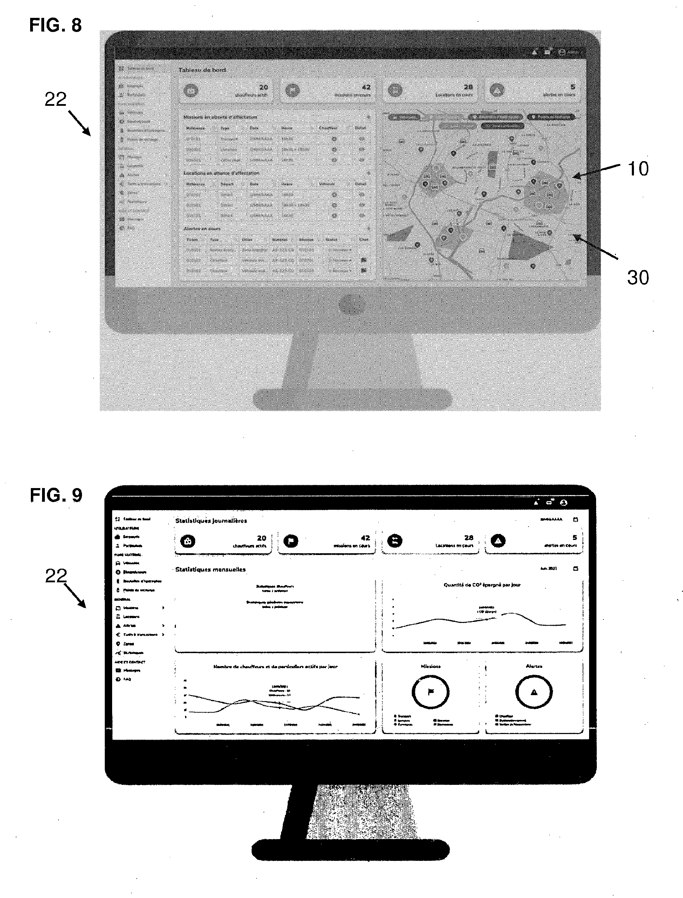

Figures 8 and 9 show screens of a software belonging to the software suite (22) and related to the system (1).

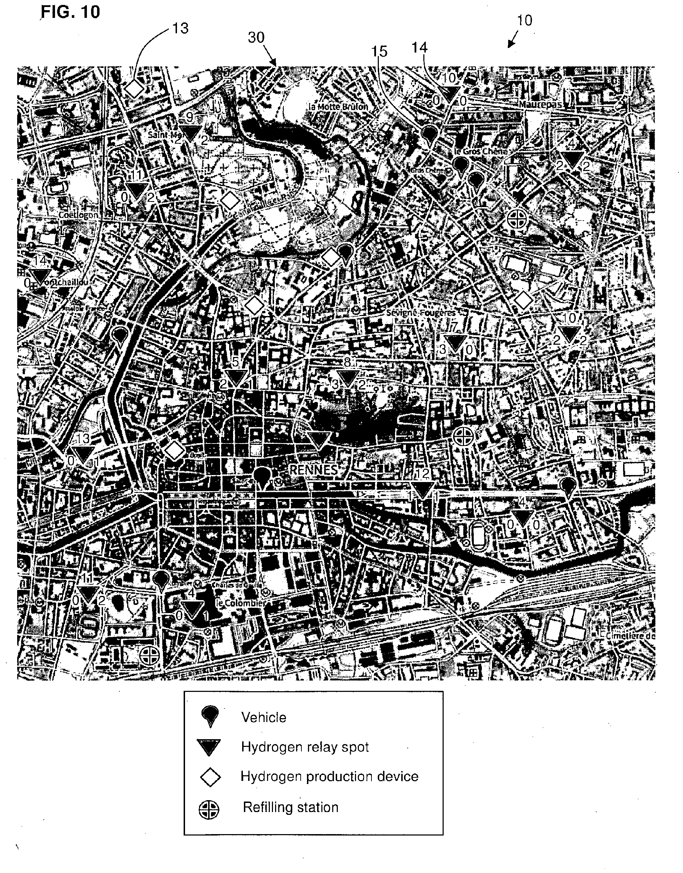

Figure 10 is map of a territory (10) equipped with the system (1) according to the invention.

Other non-shown embodiments can be implemented within the scope of the invention. In addition, technical features of the different embodiments can be, in whole or part, combined with each other. Thus, the system (1) and the method can be adapted to the specific requirements of the application.

## Claims

1. System (1) for managing a smart energy grid (10) on a territory (30), wherein the system (1) comprises:
- the smart energy grid (10), and
- a data processing system (20);
wherein the smart energy grid (10) comprises several hydrogen devices (12), including at least:
- a hydrogen storage device (14), and
- a hydrogen consumption device (15);
wherein each hydrogen device (12) has device parameters (DP) arranged in four categories:
- material inputs,
- energy source inputs,
- internal data inputs, and
- outputs;
wherein the data processing system (20) is configured:
- for monitoring the device parameters (DP); and
- for implementing a decision step, acting on the smart energy grid (10), based on decision parameters (D20) including the device parameters (DP).

2. System (1) according to claim 1, wherein decision steps are performed continuously by the data processing system (20).

3. System (1) according to any one of the preceding claims 1 or 2, wherein the decision step is based on decision parameters (D20) arranged in two categories:
- internal parameters (IP) related to the smart energy grid (1 0), including the device parameters (DP), and
- external parameters (EP) independent from the smart energy grid (10).

4. System (1) according to any one of the preceding claims 1 to 3, wherein the data processing system (20) is configured for implementing a decision step consisting in optimizing operation of at least some of the hydrogen devices (12).

5. System (1) according to any one of the preceding claims 1 to 4, wherein the data processing system (20) is configured for implementing a decision step consisting of deciding whether to use a hydrogen device or not.

6. System (1) according to any one of the preceding claims 1 to 5, wherein the data processing system (20) comprises a sensor network (23), which is connected to the hydrogen devices (12) and which provides the internal data inputs and the outputs of the hydrogen devices (12) to the data processing system (20).

7. System (1) according to any one of the preceding claims 1 to 6, wherein the hydrogen devices (12) also comprise at least one hydrogen production device (13), for example, an electrolyzer, a vaporeforming device or a pyrolysis device.

8. System according to claim 7, wherein the hydrogen production device (13) has device parameters (DP) as follows:
- material inputs including at least one among water, biomass, and waste, such as plastic, wastewater sludge, wood;
- energy source inputs including at least a decarbonation parameter of a low carbon energy network, such as a renewable energy network (solar plant, wind turbine, etc.);
- internal data inputs including at least one among availability, startup time, lifetime, storage level, investment, maintenance, surface, yield; and
- outputs including dihydrogen, dioxygen, carbon dioxide, and heat, according to the hydrogen production method.

9. System (1) according to any one of the preceding claims 1 to 8, wherein the hydrogen consumption device (15) is an electric generator integrating an internal combustion engine or a fuel cell, designed in particular for equipping a vehicle, a factory or a building.

10. System according to any one of the preceding claims 1 to 9, wherein the hydrogen consumption device (15) has device parameters (DP) as follows:
- material inputs including dihydrogen;
- energy source inputs including at least a decarbonation parameter of a low carbon energy network, such as a renewable energy network (solar plant, wind turbine, etc.);
- internal data inputs including at least one among position, availability, startup time, lifetime, pressure, temperature, storage level, investment, maintenance, surface, yield; and
- outputs including power and heat.

11. System (1) according to any one of the preceding claims 1 to 10, wherein the data processing system (20) comprises:
- a database (21) including a set of data (D2) about the smart energy grid (10) and the territory (30),
- a software suite (22) connected to the database (21) and configured for managing the smart energy grid (10), based on the set of data (D2),
- the sensor network (23) connected to the database (21) and to the hydrogen devices (12), sending the internal data inputs and the outputs of the hydrogen devices (12) to the database (21),
wherein the set of data (D2) includes the device parameters (DP) arranged in four categories:
- the material inputs,
- the energy source inputs,
- the internal data inputs, and
- the outputs.

12. System (1) according to any one of the preceding claims 1 to 11, wherein the smart energy grid (10) also comprises an electrical device (11), for example, a wind turbine, a wind farm, a solar farm, an electric dam, or a renewable marine energy plant.

13. System (1) according to claim 12, wherein the electrical device (11) is selectively used to power:
- a hydrogen production device (13), and/or
- an installation (18), such as a factory, a harbor or a construction site;
and wherein:
- if the electrical device (11) produces less energy than needed for the installation (18), then the installation (18) is additionally powered by another energy source;
- if the electrical device (11) produces more energy than needed for the installation (18), then the electrical device (11) is also used to power the hydrogen production device (13); and
- in specific cases, the electrical device (11) is used to power only the hydrogen production device (13), while the installation (18) is powered by another energy source.

14. System (1) according to claim 12, wherein the electrical device (11) is selectively used to:
- power a hydrogen production device (13), and/or
- charge an electricity storage device, such as a battery.

15. Method for managing a smart energy grid (10) on a territory (20), by implementing the system (1) according to any one of the preceding claims 1 to 14, wherein the data processing system (20):
- monitors the device parameters (DP), and
- implements a decision step, acting on the smart energy grid (10), based on decision parameters (D20) including the device parameters (DP).
